# EUROPEAN PATENT SPECIFICATION

(11) **EP 1 545 908 B1**
(45) Date of publication and mention of the grant of the patent: **29.10.2008**
(21) Application number: 03792885.0
(22) Date of filing: 17.07.2003
(51) Int. Cl.: B60B 33/06

(54) **ROLLER/FOOT DEVICE CASTOR**
ROLLE/FUSSVORRICHTUNGSLAUFROLLE
DISPOSITIF DE ROULEMENT/EMBOUT DE PIED

(30) Priority: 30.07.2002 US 399137 P; 09.08.2002 NO 20023796
(43) Date of publication of application: 29.06.2005
(73) Proprietor: Click Wheel AS, 0212 Oslo (NO)
(72) Inventor: LIBAKKEN, Rolf, 9991 Batsfjord (NO)
(74) Representative: Briddes, Sam
(86) International application number: PCT/NO2003/000249
(87) International publication number: WO 2004/018232

(56) References cited:
- EP-A1- 0 562 483
- EP-A2- 0 153 832
- WO-A1-92/19463
- DE-A1- 2 615 266
- DE-A1- 2 705 958
- DE-A1- 19 801 509
- FR-A1- 2 686 833

## Description

The present invention relates to a device for moving an object by means of a roller device which can be concealed in a sleeve body.

Roller devices are often employed when moving objects in order to reduce the load and facilitate manoeuvring. The roller devices may be directly attached to the object that has to be moved, either releasably or as an integrated part of the object. The object may also be placed on a support unit equipped with roller devices. Objects and support units equipped with roller devices and used for moving objects are often also required to be capable of assuming a stationary position.

One solution for achieving such a position will be to equip the roller devices with brake means. Particularly when using roller devices on objects where a high degree of stability is required, and especially where the objects in themselves are heavy or are carriers of heavy and/or unstable loads, it will often not be sufficient to equip the roller device with ordinary brake means. This applies particularly in connection with furniture elements and objects which have to remain stationary for a lengthy period.

It is therefore an object of the present invention to provide technical solutions whereby an object can both be moved and will be capable of achieving a position where the object remains stationary relative to the base.

An arrangement of this kind according to the preamble of claim 1 for permitting an object to both be moved and remain stationary is known from DE 198 01 509. In this publication a device is described for achieving easy displacement of a piece of furniture, using a roller body and a spring mounted in a sleeve which forms part of the leg of a piece of furniture. When the furniture is unloaded, the spring will push the roller body out of the chair leg into a position where the furniture can be moved. When the furniture is loaded against the ground, the roller body is pressed into the leg of the furniture and in this condition the furniture will remain stationary relative to the base.

In the solution disclosed in DE 198 01 509 the device is not equipped with means or arrangements for securing the roller body in the rolling position. A drawback of the solution disclosed in DE 198 01 509 is that if the furniture is loaded or the actual roller body meets an obstacle on the floor, the furniture's capacity to move will be diminished, since the roller body will be partly or entirely pushed into the sleeve.

EP 0153832 illustrates a furniture castor which can be moved between a retracted position and an extended position. The castor is attached to a rod connected to two elements with cam-shaped surfaces which control the position of the rod.

Both of the above-mentioned solutions are bulky and unsuitable for being fitted to many types of furniture, since they require too much space as well as spoiling the aesthetic appearance of the object to which they are attached.

The object of the present invention is to provide a solution which improves the disadvantages of the technical solution known from DE 198 01 509. In particular, it is an object of the present invention to achieve a solution which is small and compact and which ensures that during displacement the roller device is kept in a rolling position and is not unexpectedly pushed into the sleeve.

The above objects of the invention are achieved by means of the features in the patent claims.

The solutions proposed in the present invention may be employed together with objects within a number of areas of application. These may include furniture elements, television sets, trolleys for use in warehouses, laboratories, factories or workshops, etc. The invention will be ideally suited for transport of objects which particularly require a smooth and precise pattern of movement, etc.

The invention may be employed in connection with moving objects not only along a base which is horizontally oriented, but also along inclined and vertical bases.

In an embodiment the invention may be envisaged provided in such a manner that the sleeves can be removably mounted directly on to the object that requires to be moved. In such an embodiment a support unit in the form of a trolley or the like for moving objects will be rendered superfluous.

The invention is small and compact and will therefore be suitable for mounting on many types of objects and will have little or no effect on the object's appearance.

In an embodiment the sleeve may be equipped with ball bearings, thus providing a rotatable attachment to the movable object. In an embodiment an outer sleeve may be employed for mounting the sleeve in which the roller device is to be received. The roller device to be employed according to the invention may be in the form of a wheel, a ball or another body which is capable of generating movement directly in contact with a base.

In principle the roller/foot device according to the invention comprises an outer sleeve, a spring device, a guide sleeve and a locking sleeve adapted to be able to be inserted into the outer sleeve and a roller element.

In an embodiment the roller/foot device also comprises several ball bearings and a locking ring.

In a further embodiment the roller device also comprises a bearing ring mounted in the locking sleeve inside the locking ring.

The outer sleeve is in the form of a hollow cylinder where one end is completely or partly closed by an end surface and one end is open. The inner wall of the outer sleeve comprises first elongated ribs extending in the outer sleeve's longitudinal direction. The ribs are arranged in parallel round the sleeve's circumference with grooves between. One end surface of the ribs is inclined and comprises a step (catch). In an embodiment, on the outside of the outer sleeve are mounted tension elements which may, e.g., be cut out of the actual outer sleeve and which protrude slightly from the outer surface of the outer sleeve. These tension elements are flexible and can be pressed into alignment with the outer sleeve's outer surface, in which case they will exert an outwardly directed counterforce.

The guide sleeve and the locking sleeve are cylindrical with an external diameter which is slightly smaller than the inner diameter of the outer sleeve, with the result that they fit closely into the outer sleeve. The guide sleeve's outer wall comprises second ribs adapted to fit into the grooves between the first elongated ribs on the outer sleeve when the guide sleeve is inserted into the outer sleeve. The end surfaces of the second ribs are also inclined, and the end portions advantageously comprise two inclined surfaces with opposite inclination, with the result that the end portion is v-shaped. The guide sleeve's end portion can act as an abutment for a spring device when the guide sleeve is inserted into the outer sleeve, for example by one end of the guide sleeve comprising an end surface. The spring device also abuts against the inside of the outer sleeve's end surface and may be attached thereto, with the result that it is located between the outer sleeve and the guide sleeve. The purpose of the outer sleeve's end surface is to provide abutment for the spring device and it may be designed in a suitable manner, such as, for example, a whole surface, a surface with one or more holes, ribs, etc. Alternatively, the spring device may abut against the locking sleeve's end portion.

The locking sleeve's outer wall comprises third ribs with the same width, arranged at the same distance apart as the second ribs, where the end surface of the third ribs is inclined at an angle which is adapted to the first ribs' inclined end portions and abuts against the second ribs' end portions.

The roller element is attached abutting against the locking sleeve's end portion which faces outwards towards the outer sleeve's open end, thus enabling the roller element to rotate. In a preferred embodiment the roller element is a ball, but it may also comprise a wheel mounted rotatably against the locking sleeve, or another suitable rotatable element. The ball is made of a hard material, such as for example steel, plastic or the like, to enable it to run easily over the base. In a preferred embodiment the ball is made of a softer core with a hard outer shell.

In a further embodiment the locking sleeve also comprises a cup-shaped recess in the end facing out towards the outer sleeve's open end, the recess being adapted to receive several ball bearings and the roller element. The ball bearings are provided in the recess between the locking sleeve and the roller element, thus enabling the roller element to roll on the ball bearings with minimal friction. The roller element and the ball bearings are kept in the recess by means of a locking ring. The locking ring is adapted to be able to be clamped into the locking sleeve and has an aperture of such a size that the roller element protrudes slightly from the ring and can roll against a surface. In an embodiment the locking ring has inclined abutment surfaces, thus providing the roller element with a smooth rotational motion.

Placing the roller element in the recess also contributes towards making the device according to the invention small and compact.

The bearing ring featured in the further embodiment of the invention is a ring which is adapted to be located between the locking ring and the ball bearings. The bearing ring comprises at least one spring mechanism such as, e.g., flexible teeth to prevent the ball bearings from coming too far down along the sides of the roller element with the result that there are very few ball bearings at the top of the roller element and thereby considerable point loading on both the roller element and the locking sleeve's recess. The spring mechanism improves the circulation of ball bearings round the roller element, thereby extending the life of the ball bearings and giving less rolling friction.

The roller/foot device may, for example, be used as a furniture castor by fitting it to the piece of furniture that has to be capable of being rolled. The attachment can be easily implemented by pressing the outer sleeve into a suitable aperture in the piece of furniture, for example a table leg, sofa leg or the like. The tension elements on the outside of the outer sleeve will then be pressed together, holding the roller device in position inside the aperture.

The weight of the furniture will then cause the roller element to be pressed inwards in the outer sleeve with a certain amount of force. The spring force from the spring device will exert a counterforce with opposite direction. When the force acting inwards in the outer sleeve is greater than the spring force, this will result in a movement of the guide sleeve and the locking sleeve inside the outer sleeve. The guide sleeve's ribs will slide in the grooves in the longitudinal direction between the outer sleeve's ribs and the end surfaces of the third ribs on the locking sleeve will slide towards the end surfaces of the first ribs in the outer sleeve, thus giving the locking sleeve a movement in the circumferential direction. This movement is stopped in one of two positions: 1) when the locking sleeve's ribs abut against the steps on the outer wall's ribs or 2) against the lateral edge of the outer wall's ribs. In the first case the inward movement of the guide sleeve and the locking sleeve in the outer sleeve is stopped before the roller element has been pushed all the way into the outer sleeve and in this position the roller element can roll freely. In this case the roller/foot element acts as a roller element. In the second case the inward movement of the guide sleeve and the locking sleeve in the outer sleeve is stopped after the roller element has been pushed all the way into the outer sleeve, with the result that the roller element is no longer able to roll over the base. In this case the roller/foot element acts as a foot element. If the base is hard, the roller element will be in abutment against the base, but the flexibility of the spring device causes the weight to rest on the outer sleeve. It is an advantage that the distance between the spring device's two abutments of the spring device is sufficiently large to ensure that the spring device is not completely compressed in the roller element's inner position in order to avoid instability.

To enable the guide and locking sleeves to continue their movements in the outer sleeve, the force acting inwards in the outer sleeve must be less than the force from the spring device, for example by lifting the furniture slightly. The roller element, the guide and locking sleeves are then pressed into their outermost position in the outer sleeve. When the furniture is then lowered back on to the floor, the sleeves will once more be moved as described above until they stop in the second position.

The device according to the invention may of course be used in connection with any object that requires to be moved. The device may be affixed to the object in many ways, such as for example by screwed connection, gluing, Velcro fastening, etc. in addition to the method of attachment described above.

When using surfaces which are easily marked or scratched, the outer edge of the outer sleeve may be protected by a pad of a suitable material such as foam, plastic, felt or the like. The pad will preferably be doughnut-shaped with an outer diameter equal to or larger than the outer sleeve's outer diameter and an inner diameter larger than or equal to the diameter of the protruding part of the roller element, in order to avoid obstructing the roller element's rolling motion.

The invention and its mode of operation will be described in greater detail below with reference to the drawings.
Figures 1-4 illustrate an embodiment of the present invention with roller ball, guide and outer sleeves in four respective positions.
Figure 5 illustrates a second embodiment of the invention where the roller element is mounted in the locking sleeve by means of universal mounting.
Figure 6 illustrates a detail of a further embodiment of the invention where a bearing ring supports the ball bearings in figure 5.
Figure 7 illustrates one embodiment of the bearing ring in figure 6.
Figure 8 illustrates a second embodiment of the bearing ring in figure 6.

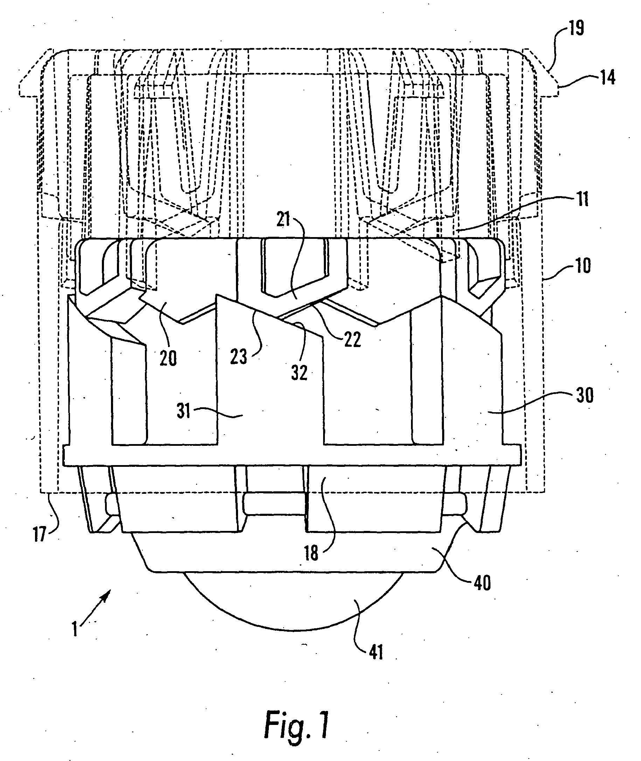

Figure 1 illustrates the device 1 according to the invention with no forces acting inwards in the outer sleeve 10. In this embodiment the roller element is a ball 41. In figure 1 the ball is kept in its outermost position in the outer sleeve 10 by the force from the spring device (not shown). The spring device presses the guide sleeve 20 outwards towards the outer sleeve's 10 open end 17. The ribs 21 on the guide sleeve slide in the grooves between the outer sleeve's ribs 11. The end surfaces (22,23) of the ribs 21 on the guide sleeve abut against the end surface 32 of the ribs 31 on the locking sleeve 30, and the locking sleeve 30 and thereby the ball 41 are thereby also pressed outwards towards the outer sleeve's 10 open end 17. In this embodiment the outer sleeve 10 has outwardly protruding edge pieces 18 which prevent the locking sleeve 30 and the guide sleeve 20 from being pushed out of the outer sleeve 10.

The ball 41 is attached against the locking sleeve 30 by means of a locking ring 40 which is clamped into the opening of the locking sleeve, with the result that a movement of the locking sleeve 30 along the outer sleeve's longitudinal direction leads to a corresponding movement of the ball 41.

In figure 1 tension elements 14 are also illustrated mounted round the outside of the outer sleeve 10. In this embodiment the tension elements 14 are produced by cutting out slots in the outer sleeve 10, but they may also be glued or attached to the outer sleeve in another suitable manner. The tension elements 14 have an outwardly protruding upper portion 19. When the device 1 is inserted in a hole for attachment to an object, the tension elements 14 are placed under tension against the walls of the hole, thus keeping the device 1 in position.

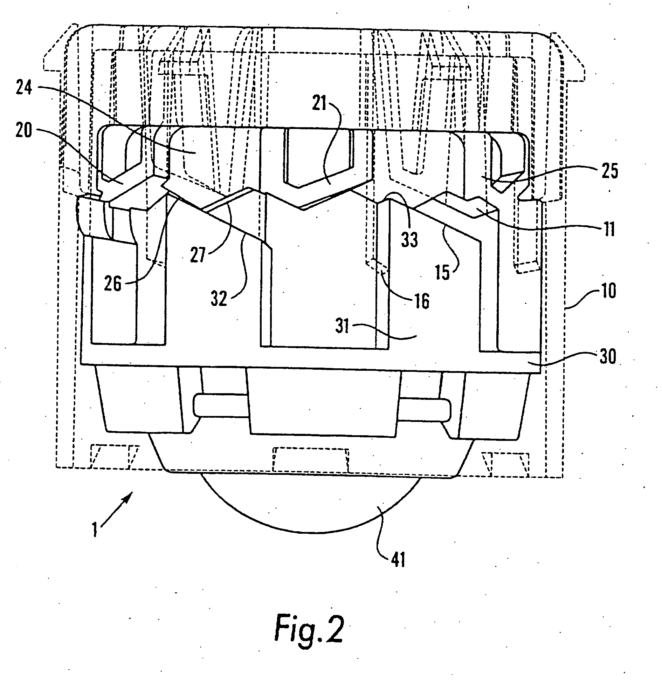

Figure 2 illustrates the device 1 after an inward force in the outer sleeve has been applied to the ball 41 with initial position as illustrated in figure 1, for example by the weight of a piece of furniture pressing the device down against a floor. The locking sleeve 30 and the guide sleeve 20 are forced inwards until the end surfaces 32 of the locking sleeve's ribs 31 come into abutment against the end surfaces 15 of the outer sleeve's ribs 11 and slide against them until they stop against the steps 16 on the ribs in the outer sleeve. This sliding movement has given the locking sleeve 30 a rotating motion in the circumferential direction. Further inward movement of the ball 41, the locking sleeve 30 and the guide sleeve 20 in the outer sleeve 10 is prevented by the step 16 and in this position a part of the ball 41 protrudes outside the opening of the outer sleeve. In this position the ball 41 can rotate freely and the device 1 can be used as a castor for moving the object (for example a piece of furniture) to which it is attached. The grooves 24 between the ribs 21 on the guide sleeve 20 have end surfaces comprising two inclined surfaces 26, 27 with opposite inclination, thus making the end portion v-shaped. In this case the bottom of the "v" is located on the right of the step 16 in the inclined end surface 15 of the outer sleeve's ribs 11, with the result that the left-hand upper edge of the locking sleeve's ribs 31 abuts against the right-hand inclined end surface 26 of the guide sleeve's ribs.

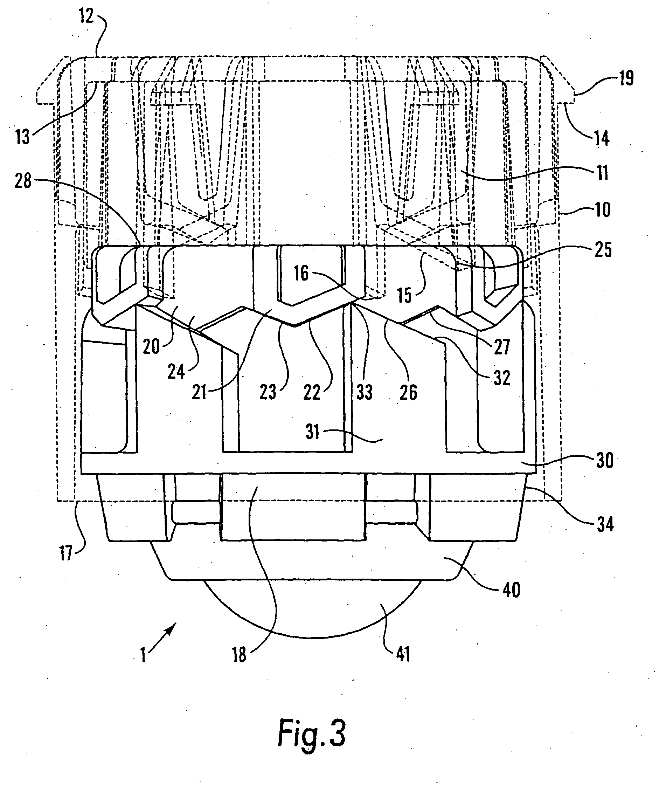

In figure 3 the device 1 as illustrated in figure 2 has been released from the external forces, for example by the object to which it is attached being slightly raised from the base.

The force from the spring device then presses the guide sleeve 20 towards the open end 17 of the outer sleeve 10. The locking sleeve's ribs 31, which are located in abutment against the left-hand inclined end surface 26 of the guide sleeve's groove, is also forced outwards towards the outer sleeve's open end and slides on the inclined end surface 26, thus giving the locking sleeve a movement in the circumferential direction past the step 16 on the outer sleeve's ribs 11. In this position the ball 41 is located in a position corresponding to the position in figure 1, furthest out of the outer sleeve 10.

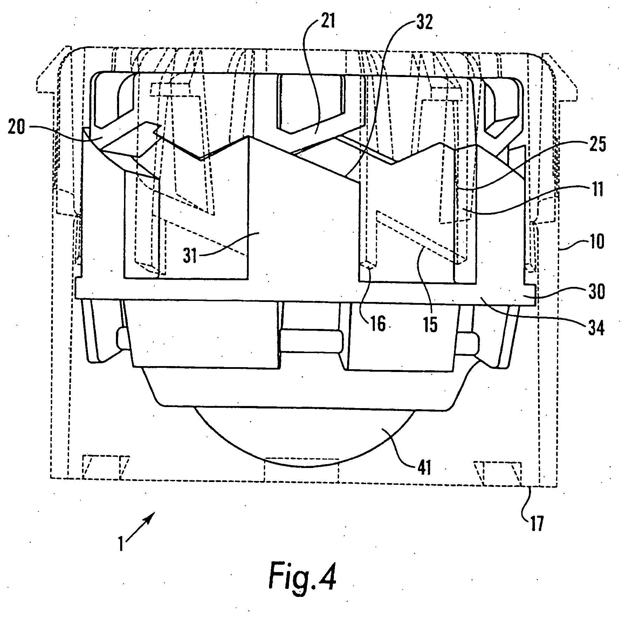

When the device 1 is once again exposed to external forces, i.e. with the ball 41 now in its initial position as in figure 3, for example by the weight of the object with castors again resting on the device 1, we obtain the situation illustrated in figure 4. The ball 41 and the locking sleeve 30 are forced inwards in the outer sleeve 10 until the end surface 32 of the locking sleeve's ribs 31 comes into abutment against the step 16 in the end surfaces 15 of the outer sleeve's ribs 11 and slides towards them until they pass the step 16, enters the grooves between the outer sleeve's ribs 11 and stops. This sliding movement has given the locking sleeve 30 a rotating motion in the circumferential direction. Further inward movement of the ball 41, the locking sleeve 30 and the guide sleeve 20 in the outer sleeve 10 is prevented by the outer edge 34 of the locking sleeve 30 abutting against the outer sleeve's ribs 11. In this position the whole ball 41 is in a retracted position aligned with or inside the outer sleeve's aperture 17. In this position the ball 41 is unable to roll over the base and the device 1 acts as a foot element.

By means of repeated application and release of forces on the device 1, the ball 41 will repeatedly assume the positions described above in sequence, thus permitting the device 1 to be easily moved from a rolling position to a foot position and vice versa.

In figures 1-4 the ribs 21 on the guide sleeve 20 have two inclined surfaces with opposite inclination, thus making the end portion v-shaped. However, this end portion may also have other shapes, for example a rounded shape, asymmetrical v-shape, a inclined surface and a straight surface or the like, as long as it has the desired effect, viz. to guide the ribs 31 on the locking sleeve past the edge 25 or the step 16 of the ribs 11 on the outer sleeve 10 so that the end surface of the ribs 31 on the locking sleeve 30 comes into abutment against the end surfaces of the step 16 and the ribs 11 respectively.

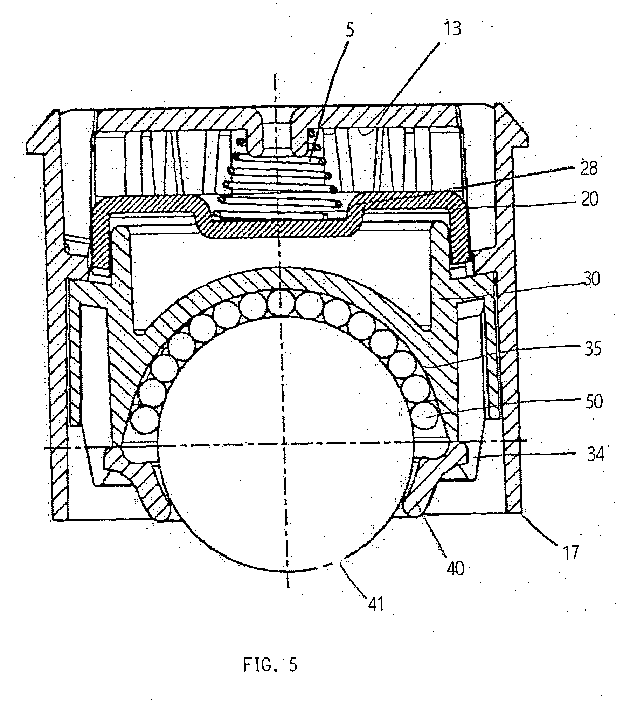

In figure 5 a second embodiment of the invention is illustrated where the ball 41 is mounted by means of universal mounting. In this case the locking sleeve 30 comprises a cup-shaped recess 35 in the end facing out towards the outer sleeve's open end. In the recess 35 are placed several ball bearings 50 and the ball 41 abuts against the ball bearings 50, thus enabling the ball 41 to roll with minimal friction. The ball 41 and the ball bearings 50 are kept in the recess 35 by means of a locking ring 40. The locking ring 40 is adapted to be able to be clamped into the locking sleeve 30 and has an aperture of such a size that the ball 41 projects slightly from the ring 40 and can roll against a surface.

Figure 5 also illustrates the spring device 5 abutting against the inside of the outer sleeve's end surface 13 and the guide sleeve's 20 end surface 28.

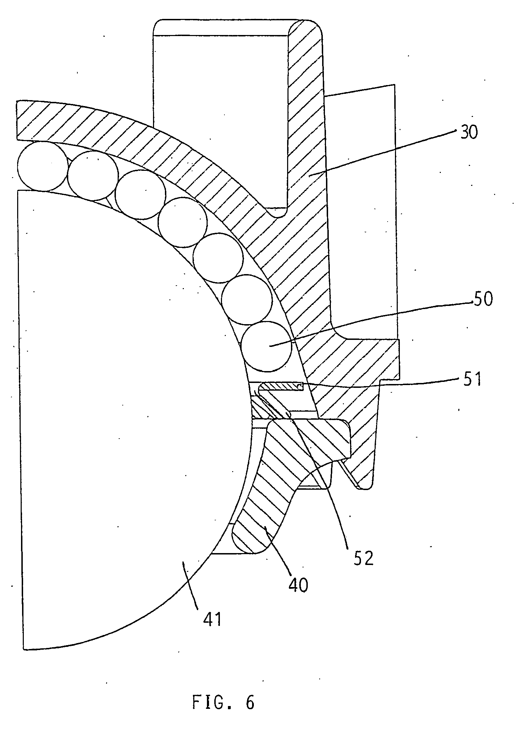

Figure 6 is a sectional view of a detail of a further embodiment of the invention. The bearing ring 51 is a ring which is adapted to be located between the locking ring 40 and the ball bearings 50. The bearing ring 51 comprises a spring mechanism 52 such as, e.g. flexible teeth to prevent the ball bearings from coming too far down along the sides of the ball 41, with the result that there are very few ball bearings at the top of the ball 41 and thereby considerable point loading on both the ball 41 and the locking sleeve's 30 recess. The spring mechanism 52 also improves the circulation of ball bearings 50 round the ball 41, thereby extending the life of the ball bearings 40 and giving less rolling friction.

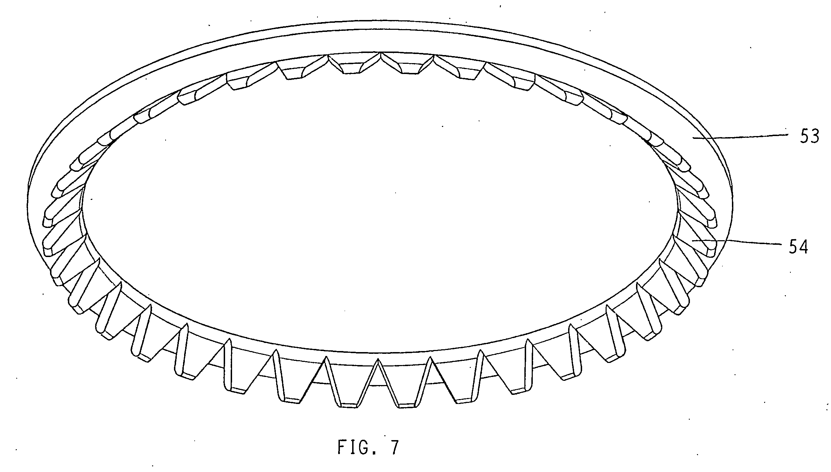

Figure 7 illustrates a possible embodiment of bearing ring 53 with spring mechanism 54.

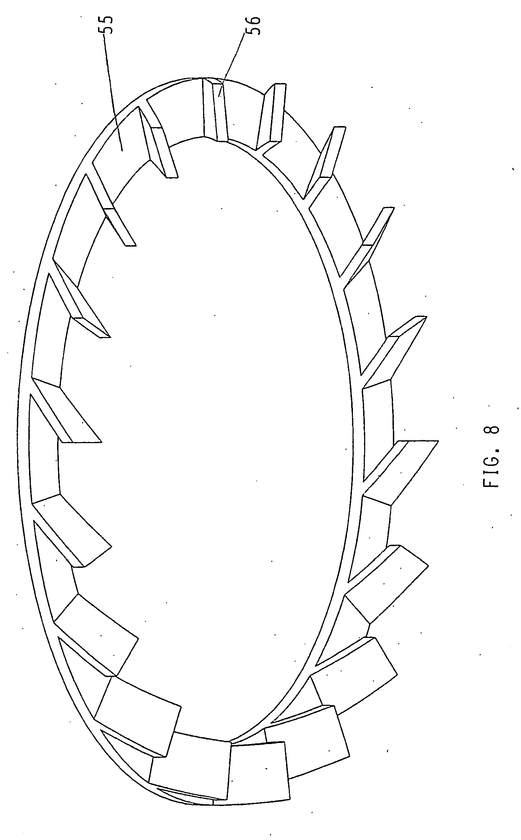

Figure 8 illustrates an alternative embodiment of bearing ring 55 with spring mechanism 56.

## Claims

1. A roller/foot device (1), comprising
- a cylindrical outer sleeve (10) with one end completely or partly closed (13) by an end surface and one open (17) end,
- a locking sleeve (30) arranged inside the outer sleeve (10),
- a spring device where one end abuts against the outer sleeve's closed end (13) and the other end abuts against one end portion of a guide sleeve or one end portion of the locking sleeve, and
- a roller element (41) which is rotatably mounted abutting against the locking sleeve's (20) end portion located at the extreme end of the outer sleeve (10),
**characterised in that**
the outer sleeve's inner wall(s) comprise first elongated ribs (11), which extend in the outer sleeve's longitudinal direction with inclined end portions (15) with a step (16) and which are arranged in parallel with grooves between round the circumference of the sleeve (10), and **in that**
a guide sleeve (20) is arranged inside the outer sleeve (10) and the guide sleeve's outer wall comprises second ribs (21) where the width of the second ribs is equal to or less than the grooves between the first ribs (11) and which have end portions comprising at least one inclined surface (22,23) and grooves (24) between the ribs (21) which similarly have end portions with at least one inclined surface (26,27),
and the outside of the locking sleeve comprises third ribs (31) with the same width and arranged at the same distance apart as the second ribs (21) in the guide sleeve (20), and which have inclined end portions (32) at an angle which is adapted to the first ribs' inclined end portions (15) and which abut against the second ribs' end portions (22),
*with the result that*
- when the roller element (41) is subjected to a force that acts inwardly in the outer sleeve (10), the spring device will exert a counterforce which presses the roller element (41) towards the outer sleeve's open end,
- when the force that acts inwardly in the outer sleeve is sufficiently great (greater than the force from the spring device),
- the second ribs (21) on the guide sleeve will slide in the longitudinal direction in the grooves on the outer sleeve (10),
- the end portions (32) of the third ribs will slide towards the end portions (15) of the first ribs, thus generating a movement of the locking sleeve (30) in the circumferential direction, the movement in the circumferential direction being stopped by the third ribs (31) abutting against the steps (16) on the first ribs' end surfaces (15) in a position where the roller element (41) is in its first position, or against the first ribs' (11) side walls in a second position where the roller element (41) is in its second position, depending on the roller element's initial position,
- when the force acting inwardly in the outer sleeve (10) is less than the force from the spring device, the roller element is pressed into its outer, third position and
- when the roller element (41) is subjected to repeated forces in the inward direction, the roller element will assume a sequence of positions in the outer sleeve's longitudinal direction, where the roller element in the first position protrudes from the outer sleeve and in the second position is completely inside the outer sleeve.

2. A roller device according to claim 1,
**characterised in that** it further comprises several ball bearings and a locking ring and that
- the locking sleeve is provided with a cup-shaped recess in the end facing out towards the outer sleeve's open end, the recess being adapted to receive the ball bearings and the roller element, and
- the locking ring is designed to be able to be clamped into the locking sleeve so that the ball bearings and the roller element are held against the recess in the locking sleeve.

3. A roller device according to claim 1,
**characterised in that** it further comprises a bearing ring which is adapted to fit between the locking ring and the ball bearings.

4. A roller device according to claim 3,
**characterised in that** the bearing ring comprises at least one spring mechanism such as, e.g. flexible teeth.

5. A roller device according to claim 1,
**characterised in that** the end portions of the second ribs on the guide sleeve comprise two inclined surfaces.

6. A roller device according to claim 1,
**characterised in that** the roller element is made of a soft/flexible material surrounded by a harder material.

7. A roller device according to claim 1,
**characterised in that** the outer sleeve also comprises tension devices for attachment to a piece of furniture.

8. A roller device according to claim 1,
**characterised in that** a protective pad is provided on the outer sleeve's outer edge.

9. A roller device according to claim 8,
**characterised in that** the pad is doughnut-shaped with an outer diameter equal to or larger than the outer sleeve's outer diameter.

## Patentansprüche

1. Rollen-/Fußvorrichtung (1), welche enthält:
eine zylindrische Außenhülse (10), wobei ein Ende vollständig oder teilweise durch eine Endoberfläche und ein offenes (17) Ende geschlossen (13) ist,
eine Verriegelungshülse (30), welche innerhalb der Außenhülse (10) angeordnet ist,
eine Federvorrichtung, bei welcher ein Ende gegen das geschlossene Ende (13) von der Außenhülse anliegt und das weitere Ende gegen einen Endabschnitt von einer Führungshülse oder dem Endabschnitt von der Verriegelungshülse anliegt,
und ein Rollenelement (41), welches drehbar befestigt ist, wobei es gegen den Endabschnitt von der Verriegelungshülse (20) anliegt, welcher sich an einem äußeren Ende von der Außenhülse (10) befindet,
**dadurch gekennzeichnet, dass**
die Innenwand bzw. die Innenwände von der Außenhülse erste langgestreckte Rippen (11) enthalten, welche sich in Längsrichtung der Außenhülse mit geneigten Endabschnitten (15) mit einer Stufe (16) erstrecken, und welche parallel mit Nuten zwischen dem runden Umfang von der Hülse (10) angeordnet sind, und
eine Führungshülse (20) innerhalb der Außenhülse (10) angeordnet ist, und die Außenwand der Führungshülse zweite Rippen (21) enthält, wobei die Breite von den zweiten Rippen gleich oder kleiner als die Nuten zwischen den ersten Rippen (11) ist, und welche Endabschnitte haben, welche zumindest eine geneigte Oberfläche (22,23) und Nuten (24) zwischen den Rippen (21) enthalten, welche ähnliche Endabschnitte mit zumindest einer geneigten Oberfläche (26,27) haben, und
die Außenseite von der Verriegelungshülse dritte Rippen (31) mit der gleichen Breite enthält, und welche bei der gleichen Distanz wie die zweiten Rippen (21) in der Führungshülse (20) angeordnet sind, und welche geneigte Endabschnitte (32) bei einem Winkel haben, welcher den geneigten Endabschnitten (15) von den ersten Rippen angepasst ist, und welche an den Endabschnitten (22) von den zweiten Rippen anliegen,
mit dem Ergebnis, dass
wenn das Rollenelement (41) einer Kraft unterworfen wird, welche nach innen in die Außenhülse (10) wirkt, die Federvorrichtung eine Gegenkraft ausüben wird, welche das Rollenelement (41) zu dem offenen Ende von der Außenhülse drückt,
wenn die Kraft, welche nach innen in die Außenhülse wirkt, ausreichend groß ist (größer als die Kraft von der Federvorrichtung),
die zweiten Rippen (21) an der Führungshülse in Längsrichtung in den Nuten an der Außenhülse (10) gleiten werden,
die Endabschnitte (32) von den dritten Rippen zu den Endabschnitten (15) von den ersten Rippen gleiten werden, wodurch somit eine Bewegung von der Verriegelungshülse (30) in Umfangsrichtung erzeugt wird, wobei die Bewegung in der Umfangsrichtung durch die dritten Rippen (31) beendet wird, welche gegen die Stufe (16) auf den Endoberflächen (15) von den ersten Rippen in einer Position, bei welcher das Rollenelement (41) in seiner ersten Position ist, oder gegen die Seitenwände von den ersten Rippen (11) in einer zweiten Position anliegen, bei welcher das Rollenelement (41) in seiner zweiten Position ist, und zwar in Abhängigkeit von der Anfangsposition von dem Rollenelement,
wenn die Kraft, welche nach innen in die Außenhülse (10) wirkt, kleiner als die Kraft von der Federvorrichtung ist, das Rollenelement in seine äußere, dritte Position gedrückt wird, und
wenn das Rollenelement (41) wiederholten Kräften in die nach innen gerichtete Richtung unterworfen wird, das Rollenelement eine Sequenz von Positionen in Längsrichtung der Außenhülse annehmen wird, wobei das Rollenelement in der ersten Position von der Außenhülse vorragt und in der zweiten Position vollständig innerhalb der Außenhülse ist.

2. Rollenvorrichtung nach Anspruch 1,
**dadurch gekennzeichnet, dass** sie ferner mehrere Kugellager und einen Verriegelungsring enthält, und dass
die Verriegelungshülse mit einer kappenförmigen Aussparung in der Endfläche zu dem offenen Ende von der Außenhülse hin bereitgestellt ist, wobei die Aussparung dazu ausgelegt ist, um die Kugellager und das Rollenelement aufzunehmen, und
der Verriegelungsring dazu entworfen ist, dazu in der Lage zu sein, in die Veriegelungshülse geklemmt zu werden, sodass die Kugellager und das Rollenelement gegen die Aussparung in der Verriegelungshülse gehalten werden.

3. Rollenvorrichtung nach Anspruch 1,
**dadurch gekennzeichnet, dass** sie ferner einen Lagerring enthält, welcher dazu ausgelegt ist, um zwischen dem Verriegelungsring und den Kugellagern zu passen.

4. Rollenvorrichtung nach Anspruch 3,
**dadurch gekennzeichnet, dass** der Lagerring zumindest einen Federmechanismus enthält, wie beispielsweise flexible Zähne.

5. Rollenvorrichtung nach Anspruch 1,
**dadurch gekennzeichnet, dass** die Endabschnitte von den zweiten Rippen auf der Führungshülse zwei geneigte Oberflächen enthalten.

6. Rollenvorrichtung nach Anspruch 1,
**dadurch gekennzeichnet, dass** das Rollenelement aus einem nachgiebigen/flexiblen Material erstellt ist, welches durch ein härteres Material umgehen ist.

7. Rollenvorrichtung nach Anspruch 1,
**dadurch gekennzeichnet, dass** die Außenhülse ebenfalls Spannungsvorrichtungen zur Befestigung an ein Möbelstück enthält.

8. Rollenvorrichtung nach Anspruch 1,
**dadurch gekennzeichnet, dass** ein Schutzfeld an der Außenkante der Außenhülse bereitgestellt ist.

9. Rollenvorrichtung nach Anspruch 8,
**dadurch gekennzeichnet, dass** das Feld in der Form eines Donats geformt ist, wobei ein Außendurchmesser gleich oder größer als der Außendurchmesser von der Außenhülse ist

## Revendications

1. Dispositif de roulement/pied (1) comprenant - un manchon extérieur cylindrique (10) avec une extrémité complètement ou partiellement fermée (13) par une surface d'extrémité et une extrémité ouverte (17), - un manchon de verrouillage (30) agencé à l'intérieur du manchon extérieur (10),
➢ un dispositif de ressort où une extrémité prend appui contre l'extrémité fermée (13) du manchon extérieur et l'autre extrémité prend appui contre une partie d'extrémité d'un manchon de guidage ou une partie d'extrémité du manchon de verrouillage, et
➢ un élément de roulement (41) qui est monté de façon relative prenant appui contre la partie d'extrémité du manchon de verrouillage (20) positionnée au niveau de l'extrémité terminale du manchon extérieur (10), **caractérisé en ce que** la ou les paroi (s) intérieure (s) du manchon extérieur comprennent des premières nervures oblongues (11) qui s'étendent dans la direction longitudinale du manchon extérieur avec des parties d'extrémité inclinées (15) avec un épaulement (16) et qui sont agencées en parallèle avec des rainures entre celles-ci autour de la circonférence du manchon (10), et **en ce qu'**un manchon de guidage (20) est agencé à l'intérieur du manchon extérieur (10) et la paroi extérieure du manchon de guidage comprend des deuxièmes nervures (21) où la largeur des deuxièmes nervures est égale ou inférieure aux rainures entre les premières nervures (11) et qui possèdent des parties d'extrémité comprenant au moins une surface inclinée (22, 23) et des rainures (24) entre les nervures (21) qui possèdent de façon similaire des parties d'extrémité avec au moins une surface inclinée (26, 27), et l'extérieur du manchon de verrouillage comprend des troisièmes nervures (31) avec la même largeur et séparées selon la même distance que les deuxièmes nervures (21) dans le manchon de guidage (20), et qui possèdent des parties d'extrémité inclinées (32) à un angle qui est adapté aux parties d'extrémité inclinées (15) des premières nervures et qui prennent appui contre les parties d'extrémité (22) des deuxièmes nervures,
avec le résultat que
➢ lorsque l'élément de roulement (41) est soumis à une force qui agit vers l'intérieur dans le manchon extérieur (10), le dispositif de ressort exercera une contre-force qui comprime l'élément de roulement (41) vers l'extrémité ouverte du manchon extérieur,
➢ lorsque la force qui agit vers l'intérieur dans le manchon extérieur est suffisamment importante (supérieure à la force à partir du dispositif de ressort),
➢ les deuxièmes nervures (21) sur le manchon de guidage coulisseront dans la direction longitudinale dans les rainures sur le manchon extérieur (10),
➢ les parties d'extrémité (32) des troisièmes nervures coulisseront vers les parties d'extrémité (15) des premières nervures, générant ainsi un mouvement du manchon de verrouillage (30) dans la direction circonférentielle, le mouvement dans la direction circonférentielle étant arrête par les troisièmes nervures (31) prenant appui contre les épaulements (16) sur les surfaces d'extrémité (15) des première nervures dans une position où l'élément de roulement (41) est dans sa première position, ou contre les parois latérales des premières nervures (11) dans une deuxième position ou l'élément de roulement (41) est dans sa deuxième position, suivant la position initiale de l'élément de roulement,
➢ lorsque la force agissant vers l'intérieur dans le manchon extérieur (10) est inférieure à la force à partir du dispositif de ressort, l'élément de roulement est comprimé dans sa troisième position extérieure et
➢ lorsque l'élément de roulement (41) est soumis à des forces répétées dans la direction intérieure, l'élément de roulement prendra une séquence de positions dans la direction longitudinale du manchon extérieur, où l'élément de roulement dans la première position fait saillie à partir du manchon extérieur et dans la deuxième position est complètement à l'intérieur du manchon extérieur.

2. Dispositif de roulement selon la revendication 1, **caractérisé en ce qu'**il comprend en outre plusieurs paliers à billes et une bague de verrouillage et **en ce que**
➢ le manchon de verrouillage est pourvu d'un évidement en forme de coupelle dans l'extrémité tournée vers l'extrémité ouverte du manchon extérieur, l'évidement étant adapté pour recevoir les paliers à billes et l'élément de roulement, et
➢ la bague de verrouillage est conçue pour pouvoir être serrée dans le manchon de verrouillage de sorte que les paliers à billes et l'élément de roulement soient maintenus contre l'évidement dans le manchon de verrouillage.

3. Dispositif de roulement selon la revendication 1, **caractérisé en ce qu'**il comprend en outre une bague de palier qui est adaptée pour se loger entre la bague de verrouillage et les paliers à billes.

4. Dispositif de roulement selon la revendication 3, **caractérisé en ce que** la bague de palier comprenant au moins un mécanisme de ressort tel que, par exemple, des dents flexibles.

5. Dispositif de roulement selon la revendication 1, **caractérisé en ce que** les parties d'extrémité des deuxièmes nervures sur le manchon de guidage comprennent deux surfaces inclinées.

6. Dispositif de roulement selon la revendication 1, **caractérisé en ce que** l'élément de roulement est fait d'un matériau mou/flexible entouré par un matériau plus dur.

7. Dispositif de roulement selon la revendication 1, **caractérisé en ce que** le manchon extérieur comprend également des dispositifs de tension destinés à être fixés à un meuble.

8. Dispositif de roulement selon la revendication 1, **caractérisé en ce qu'**un tampon de protection est prévu sur le bord extérieur du manchon extérieur.

9. Dispositif de roulement selon la revendication 8, **caractérisé en ce que** le tampon possède une forme annulaire avec un diamètre extérieur égal ou supérieur au diamètre extérieur du manchon extérieur.
